# EUROPEAN PATENT APPLICATION

(11) **EP 3 131 329 A1**
(43) Date of publication of application: **15.02.2017**
(21) Application number: 16183934.5
(22) Date of filing: 12.08.2016
(51) Int. Cl.: H04W 24/02

(54) **COORDINATION USING SELF ORGANISING NETWORK FUNCTIONALITY**

(30) Priority: 12.08.2015 GB 201514317
(71) Applicant: Vodafone IP Licensing Limited, The Connection Newbury Berkshire RG14 2FN (GB)
(72) Inventor: LU, Zhanhong, Paddington Central, Greater London W2 6BY (GB)
(74) Representative: Boult Wade Tennant

(57) **Abstract**

Analysis of cellular network base stations may be performed by a computational engine. A ranking of the cellular network base stations, generated at an Automatic Neighbour Relation (ANR) function of a Self-Organising Network (SON) platform is received. A set of base stations for coordinated operation is determined based on the received ranking of the cellular network base stations.

## Description

### Technical Field of the Invention

The invention concerns computational engine or a method for analysis of cellular network base stations, in particular for determining a set of base stations for coordinated operation.

### Background to the Invention

In cellular networks, such as those based on standard specifications set by the Third Generation Partnership Project (3GPP), there has been an evolution in Radio Access Network (RAN) architectures from a distributed architecture (also known as D-RAN) to cloud architecture (C-RAN).

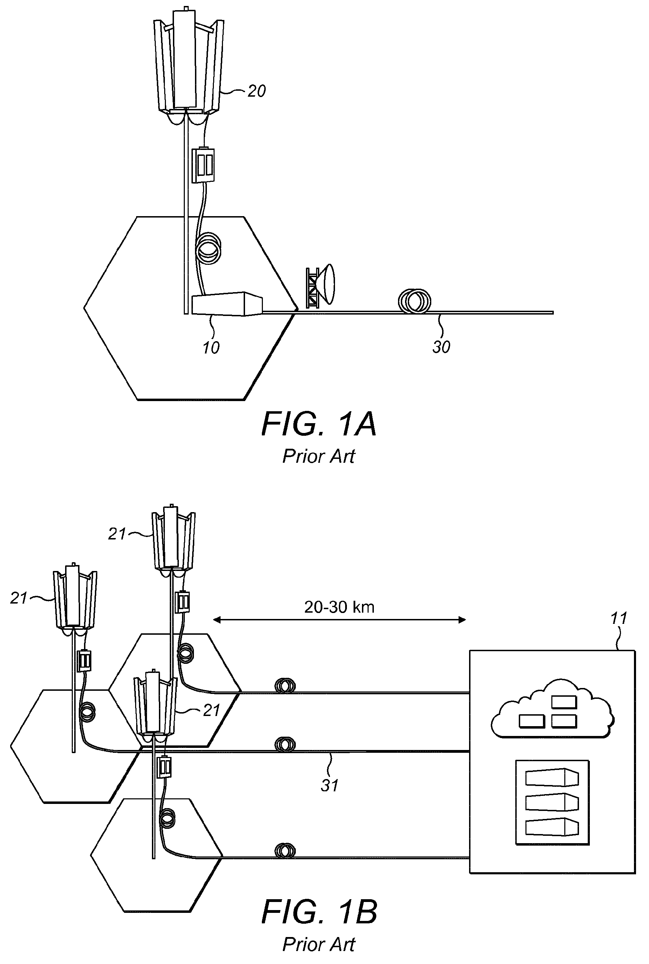

Referring first to Figure 1A, there is shown a schematic diagram of a known D-RAN architecture. This is an existing approach in which a Base Band Unit (BBU) 10 and a Remote Radio Unit (RRU) 20 are located locally together. Digital radio processing at the BBU 10 is therefore performed locally at each radio site. The backhaul 30 of D-RAN architecture can use fibre, microwave and/or wireless technology.

Referring next to Figure 1B, there is shown a schematic diagram of a known C-RAN architecture. Here, the BBUs are physically stacked in a central office 11. The BBU resources are therefore centralised in one location. The radio units 21 are located remotely, often 20 to 30km away. The front-haul 31 between BBU and RRU, carrying digitised radio sent at a rate of tens of gigabytes per second, always uses fibre. C-RAN architecture may reduce the number of BBUs and increase the BBU utilisation. It may also make it easier to implement multi-site coordination, for example using coordinated scheduling, joint transmission and joint reception.

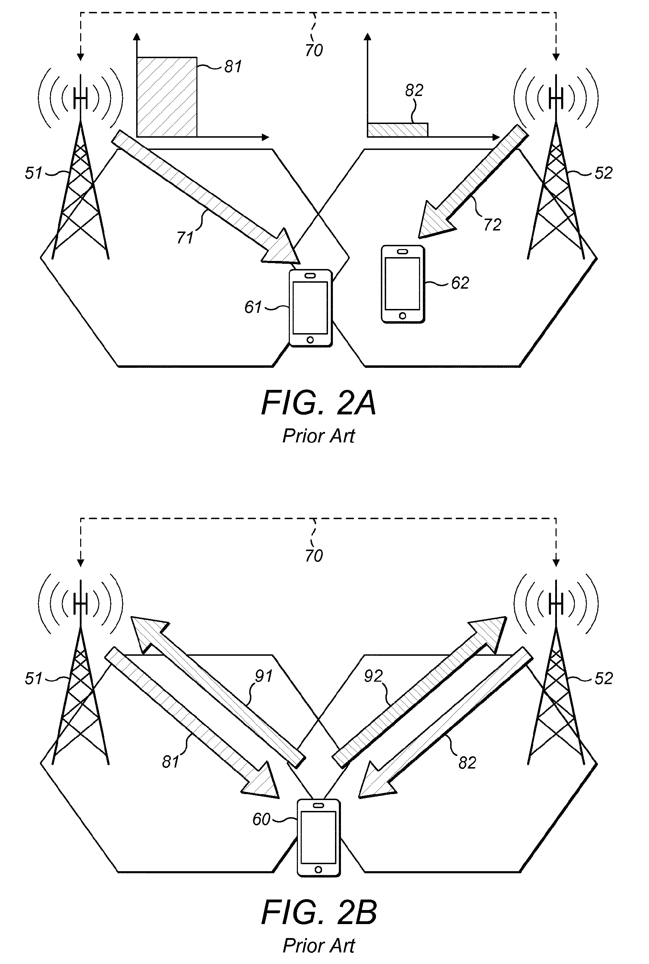

Multi-site coordinated operation, in which multiple base stations (each referred to as a NodeB in UMTS or eNodeB in LTE) operate together to improve the overall radio interface capacity (especially at the cell edges) is also desirable. Referring now to Figure 2A, there is schematically illustrated a coordinated scheduling scheme. A first cell 51 and a second cell 52 are neighbouring. The first cell 51 and second cell 52 exchange scheduling information via an interface 70. In particular, this information relates to a first User Equipment (UE) 61 and a second UE 62, located at the cell edge areas. Using the exchanged information, the first cell 51 and second cell 52 can coordinate their transmission scheduling to use different resource blocks. Thus, the transmissions 71 of the first cell 51 to the first UE 61 are shown schematically by first resource block 81 and the transmissions 72 of the second cell 52 to the second UE 62 are shown schematically by second resource block 82. The coordination means that the first resource block 81 and the second resource block 82 are different, so that the interference between the UEs can be mitigated and cell edge user throughput is improved.

Referring then to Figure 2B, there is schematically illustrated a joint transmission and/or joint reception scheme, for example as part of a Coordination Multi-Point (CoMP) operation. Where the same elements are shown as in Figure 2A, the same reference numerals have been employed. Here, a single UE 60 is served by the first cell 51 and the second cell 52. A first downlink transmission 81 is made from the first cell 51 to the UE 60 and a second downlink transmission 82 is made from the second cell 52 to the UE 60. A first uplink transmission 91 is made from the UE 60 to the first cell 51 and a second uplink transmission 92 is made from the UE 60 to the second cell 52. In joint transmission (JT), downlink data packets (such as in the first downlink transmission 81 and the second downlink transmission 82) are served to one or multiple UEs from multiple cells at the same time. Antenna weights applied at each cell are chosen to achieve simultaneous coherent channel combining to the target UE. In joint reception, each UE (such as UE 60) transmits the same data (for example, in the first uplink transmission 91 and the second uplink transmission 92) to multiple cells to achieve better cell capacity. Both joint transmission and joint reception are designed to improve system capacity. They can be used separately or together.

In any form of coordinated operation, one challenge is to determine a set of base stations to operate in a multi-site coordinated way. This may be termed a coordination group. As noted above, the C-RAN architecture is well-suited to this challenge, in view of the centralised way in which the network controllers and BBUs are configured. However due to the requirements for fibre, the C-RAN architecture is not straightforward to implement. It will therefore take a long time to be put in place.

An existing approach for the selection of the coordination group is simply based on the cells' location. Then, each cell chooses its tier 1 neighbour cells for coordination. This is suitable for both C-RAN and D-RAN architectures, but is not very intelligent and therefore far from optimal. A more sophisticated approach has been considered in US-2011/0105139. This proposes coordinating the allocation of resource elements among neighbouring cells using Self-Organising Network (SON) functionality implemented at each base station. This works in a distributed way, with each base station determining other base stations with which to coordinate based on neighbour relations, but becomes difficult to optimise and adds significant complexity to the base station implementations.

In view of the above, it is therefore desirable to improve the implementation of multi-site coordination for less centralised architectures, such as those based on a D-RAN architecture, and especially those with a non-ideal backhaul (such as microwave) in a more straightforward and flexible way.

### Summary of the Invention

Against this background, the present invention provides a computational engine for analysis of cellular network base stations according to claim 1, a method for analysis of cellular network base stations in line with claim 13 and a computer program in accordance with claim 15.

The Automatic Neighbour Relation (ANR) function of a Self-Organising Network (SON) platform is used to provide candidates (at least two, although preferably more than two) for a group of base stations to act a coordination group or coordination set as part of a coordinated operation. The SON platform is preferably centralised for the cellular network. The coordinated operation may comprise (or be) one or more of: coordinated scheduling; joint transmission; and joint reception. ANR implementations provide a ranking of base stations (cells, sectors, NodeBs, eNodeBs or other types of base station) according to set criteria. Using this ranking functionality of the ANR within the SON platform allows a coordination group to be determined automatically and intelligently in near-real time. This implementation may be straightforward to implement and therefore may allow additional parameters to be considered more readily. Also, this allows user mobility to be taken into consideration for the determination. This cannot be achieved using existing methodology, which uses user radio condition.

The coordination group is preferably determined by a computational engine (which may be implemented in software, hardware, firmware, programmable logic, some other type of programmable or configurable hardware or a combination of these technologies, for example). The engine may have an interface to receive rankings from the ANR and some processing logic to determine the coordination group, for example according to pre-set parameters as well as the received ranking. Additional information which may be obtained from an Operation Support System (OSS), such as cell capacity and/or user throughput, may also be used in the determination. This engine preferably sits in the SON platform and, using the ranking from the ANR, selects the base stations to form a coordination group. Thus, the engine may be an SON node.

A coordination group may be considered as a group of cells, preferably neighbouring with one another, for which at least one Resource Block (RB) and preferably multiple RBs are scheduled in respect of a UE are synchronized. This assists in managing RB assignment and allows use of these RBs in advanced transmission schemes, such as coordinated scheduling, joint transmission, joint reception. In particular, this may be applied within a distributed radio access network (D-RAN).

### Brief Description of the Drawings

The invention may be put into practice in various ways, one of which will now be described by way of example only and with reference to the accompanying drawing in which:
Figure 1A shows a schematic diagram of a known Distributed Radio Access Network architecture;
Figure 1B shows a schematic diagram of a known Cloud Radio Access Network architecture
Figure 2A schematically illustrates a coordinated scheduling scheme;
Figure 2B schematically illustrates a joint transmission and/or joint reception scheme;
Figure 3 depicts a high-level schematic diagram of coordination set discovery using a Self-Organising Network platform;
Figure 4 shows a more detailed diagram of coordination set discovery using a Self-Organising Network platform, in line with Figure 3, showing a Coordination Set Analysis Engine;
Figure 5 illustrates a flow chart of an example coordination group selection algorithm for the Coordination Set Analysis Engine of Figure 4; and
Figure 6 schematically depicts a computing device that may be used to implementing a Self-Organising Network platform or a part thereof, such as the Coordination Set Analysis Engine of Figure 4.

### Detailed Description of a Preferred Embodiment

A goal of this disclosure is to configure a coordination set or group intelligently, using the resources available within a Self-Organising Network (SON) platform. This will allow the implementation of advanced transmission schemes, such as coordinated scheduling, joint transmission and/or joint reception. For these advanced transmission schemes, a major challenge is to find an appropriate coordination group for a particular user or multiple users. Therefore, the Automatic Neighbour Relation (ANR) functionality of a Self-Organising Network (SON) platform can be used. The general functionality of ANR is specified in Third Generation Partnership Project (3GPP) standards. A new coordination group analysis engine is then used to provide timely coordination group recommendations according to a ranking from the ANR, together with user radio conditions and at least one network Key Performance Indicators (KPI), such as capacity and user throughput. The benefit of this method is that it can be done automatically in near-real time cycle.

In general terms, there may be considered a computational engine for analysis of cellular network base stations, comprising: an ANR interface, configured to receive a ranking of the cellular network base stations generated by an Automatic Neighbour Relation, ANR, function of a Self-Organising Network, SON, platform; and processing logic, configured to determine a set of base stations for coordinated operation based on the received ranking of the cellular network base stations. The ranking of the cellular network base stations may form part of neighbour relation information, which may include other data relating to neighbour relations. The ranking of the cellular network base stations may be received from the ANR function or from another node or entity. The computational engine may form part of the ANR function in one embodiment, but it can be at least partly or fully separate from it in other cases.

In another aspect, a method for analysis of cellular network base stations may be provided, comprising: receiving a ranking of the cellular network base stations generated by an Automatic Neighbour Relation, ANR, function of a Self-Organising Network, SON, platform; and determining a set of base stations for coordinated operation based on the received ranking of the cellular network base stations. The issues, optional features and implementation details relating to this aspect may correspond and/or mirror those of the computation engine aspect as described herein. A computer program, configured when operated by a processor to carry out any method as described herein, may further be provided.

According to either aspect, this provides an intelligent and readily implantable way to determine a coordination group. It may leverage the benefits provided by the existing SON functionality without significantly increasing complexity. It may also be particularly applicable to a D-RAN configuration, in which each of the cellular network base stations comprises: a respective Base Band Unit (BBU); and a respective Remote Radio Unit (RRU). Then, the RRU of each cellular network base station is typically located at the same site as the BBU of that cellular network base station.

Although a number of optional features and/or implementation details will now be described with reference to the engine aspect noted above, it will be understood that these structural and/or configuration features may be equivalently implemented as process steps of the method or computer program aspects.

In the preferred embodiment, the computational engine further comprises a performance indicator interface, configured to receive information about at least one performance indicator for the cellular network base stations. Then, the processing logic may be further configured to determine the set of base stations for coordinated operation based on the received information about at least one performance indicator. Thus, further information about the performance of the network may be used to determine the coordination group. Advantageously, the performance indicator interface is configured to receive information the about the at least one performance indicator from an OSS of the cellular network. Additionally or alternatively, each of the at least one performance indicator may be a Key Performance Indicator (KPI). In envisaged implementations, the one or more KPIs is obtained by the OSS, but it may be provided by the RAN or another part of the cellular network. Preferably, the at least one performance indicator comprises one or both of: a capacity level for the cellular network base stations; and a user throughput level for the cellular network base stations.

The coordination group may be intended for different types of coordinated operation. An indication of the intended type may be provided to the computational engine. The received indication of the type of coordinated operation may comprise one or more of: coordinated scheduling; joint transmission; and joint reception.

In the preferred embodiment, the computational engine further comprises an operation interface, configured to communicate the determined set of base stations to an OSS, of the cellular network. This may allow the OSS to implement coordinated operation using the determined set of base stations. The performance indicator interface may also communicate with the OSS. In such cases, the performance indicator interface and the operation interface may be implemented by a single interface.

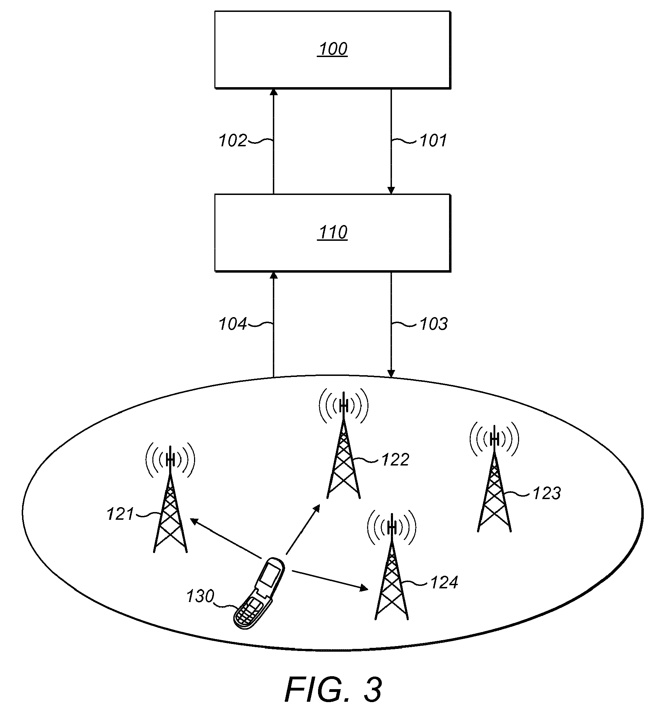

Referring now to Figure 3, there is shown a high-level schematic diagram of coordination set discovery using a SON platform. In this case, an uplink joint reception scheme is as an example for the coordination set. A UE 130 is in the vicinity of a number of base stations: first cell 121, which is the current serving cell of the UE 130; second cell 122; third cell 123; and fourth cell 124. Within the core network, there is provided an Operation Support System (OSS) 110 and a SON engine 100. User performance 104 is provided by the cells to the OSS 110 and the OSS then provides counter information 102 to the SON platform 100. The counter information 102 typically includes: Configuration Management (CM); Performance Management (PM); and Fault Management (FM) counters.

When the joint reception (in this example case) is triggered in the radio network by the radio conditions of UE 130, the SON engine 100 will provide the best coordination groups to first cell 121 for joint reception together. The SON engine 100 provides a coordination set configuration 101 to the OSS 110. Then, the OSS 110 implements the coordination set configuration 103 in the cells via the Radio Access Network (not shown). In this example, first cell 121, second cell 122 and fourth cell 124 are found to be the best coordination groups for the UE 130 to carry out the uplink joint transmission. This recommendation is preferably achieved by algorithms as described below. If the UE 130 is in a mobility scenario (that is, handover is taking place relatively frequently), the recommended coordination group should generally be updated timely and automatically using the SON platform 100.

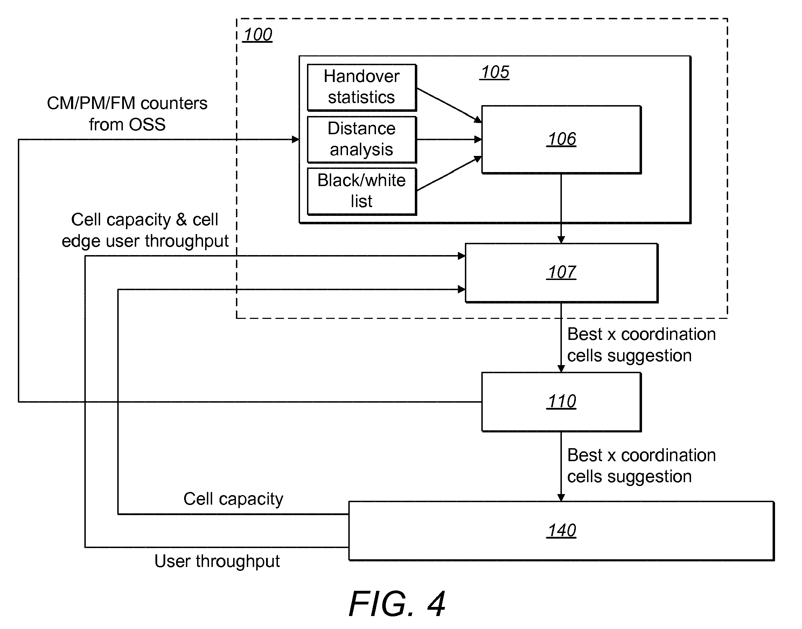

With reference to Figure 4 and in line with Figure 3, there is shown a more detailed diagram of coordination set discovery using a SON platform. Where the same features are shown as in Figure 3, identical reference numerals have been used. The SON platform 100 comprises: an ANR function 105; and a Coordination Set Analysis Engine 107. Within the ANR function 105, information (typically KPI information for example, handover statistics, distance analysis and a blacklist or whitelist, which may be provided by the OSS 110) that may be provided by the OSS 110 is used in a neighbour relations ranking functionality 106. In this way, the ANR 105 can analyse the CM, PM and/or FM data from the OSS 110, according to the statistical results (such as handover, distance, redundancy checking, black/white list analysis or others). The ANR 105 can rank the neighbour relations of the serving cell with weight factor of importance, based on these parameters.

This provides a ranking of the neighbour relations to the Coordination Set Analysis Engine 107. The Coordination Set Analysis Engine 107 then determines a recommendation for the optimal coordination set, using the ranking and using further information, such as cell capacity and user throughput (particularly for the cell edge), which may be provided by the OSS 110 (and not necessarily as shown in Figure 4). The recommendation from the Coordination Set Analysis Engine 107 is provided to the OSS 110. The OSS 110 implements the recommendation by providing it to the RAN 140, for example a Coordinated Scheme Engine within it.

The neighbour relations ranking functionality 106 of the ANR 105 is known. However, the Coordination set analysis engine 107 is an additional functionality which does not currently exist within the SON platform 100. It can perform the analysis and provide the best coordination group recommendations according to the input parameters such as cell capacity and user throughput from the OSS 110, and also the neighbour ranking from the ANR 105. Sending the coordination group recommendation through the OSS 110 allows counters in the OSS 110 to be updated directly and can therefore be beneficial.

In this way, the recommended coordination group information will be sent to serving cells in the RAN 104 via the OSS 110 for coordinated scheduling, joint transmission and/or joint reception schemes. Then, the coordination schemes take place in the radio network and the cell capacity and user throughput are measured. These are also fed back to the OSS 110. The coordination process can thereby be run in a closed-loop and in near real-time (for example in a cycle of 15 minutes duration). This approach may be even more beneficial if the UE is in a mobility scenario, as the coordination group can be updated timely using SON functionality, thus providing the best possible radio experience for that user.

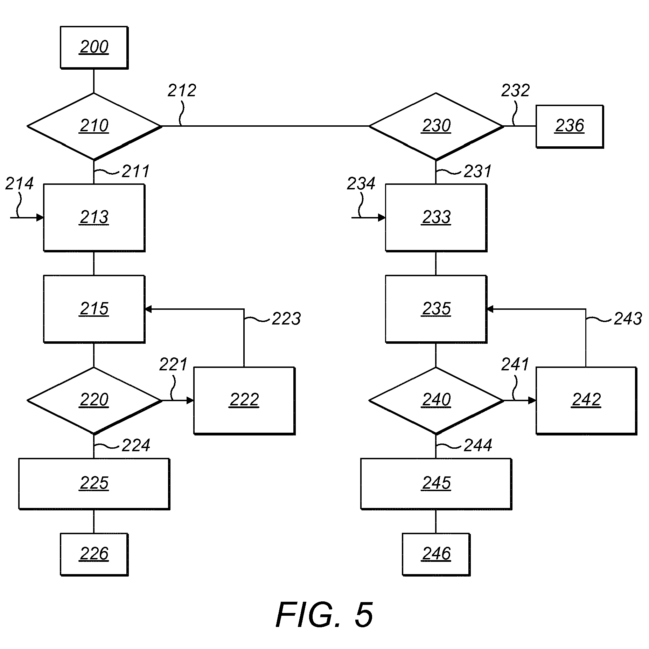

Referring next to Figure 5, there is illustrated a flow chart of an example coordination group selection algorithm for the Coordination Set Analysis Engine 107. The algorithm begins at start step 200. At a first initial decision step 210, it is determined whether Coordinated Scheduling (CS) is to be used. If it is being used, path 211 is followed. At step 213, a neighbour list with ranking 214 is provided (from the ANR 105). Neighbours having a weight greater than a first CS threshold (say, 5) are chosen as candidates for coordination. These are provided to step 215, in which the coordinated scheduling scheme is run and the cell capacity and user throughput are determined (calculated). In first feedback decision step 220, the cell capacity and user throughput are compared with possible maxima (which may be considered thresholds or targets). If these maxima are not met, path 221 is followed and in step 222, neighbours having a weight greater than a second CS threshold, higher than the first CS threshold (say, 10) are chosen as candidates for coordination. Path 223 then leads to the repetition of step 215 onwards. If the maxima are met in first feedback decision step 220, path 224 is followed and the coordination set suggestions are fixed in step 225. The algorithm then ends in step 226.

If CS is not to be used in first initial decision step 210, path 212 is followed. In second initial decision step 230, it is determined whether joint reception and/or transmission (JR/JT) is to be used. If not, path 232 is followed to end step 236, where the algorithm terminates. Otherwise (joint reception and/or transmission is to be used), path 231 is followed. At step 233, a neighbour list with ranking 234 is provided (from the ANR 105). Neighbours having a weight greater than a first JR/JT threshold, which may be higher than the first CS threshold (say, 10) are chosen as candidates for coordination. These are provided to step 235, in which the coordinated scheduling scheme is run and the cell capacity and user throughput are determined (calculated). In second feedback decision step 240, the cell capacity and user throughput are compared with possible maxima (which may be considered thresholds or targets). If these maxima are not met, path 241 is followed and in step 242, neighbours having a weight greater than a second JR/JT threshold, higher than the first JR/JT threshold (say, 20) are chosen as candidates for coordination. Path 243 then leads to the repetition of step 235 onwards. If the maxima are met in second feedback decision step 240, path 244 is followed and the coordination set suggestions are fixed in step 245. The algorithm then ends in step 246.

This therefore illustrates an example of how to select the coordination groups for coordinated scheduling and joint reception. This analysis engine can also be automated in a Self-Organising Network, for instance.

Some of the features of this algorithm may be discussed in general terms. For example, closed-loop feedback may be provided by implementing the determined coordination group. This may use an operation interface, configured to implement coordinated operation using the determined set of base stations (as noted above.) In some embodiments, at least part of the information received by the performance indicator interface may relate to when (that is, a time period when) the coordinated operation using the determined set of base stations is implemented. Then, the processing logic may be further configured to adjust the determined set of base stations for coordinated operation based on the at least part of the information received relating to when the coordinated operation using the determined set of base stations is implemented.

Beneficially, the processing logic is further configured to compare the at least part of the information received relating to when the coordinated operation using the determined set of base stations is implemented against an identified level and to adjust the determined set of base stations for coordinated operation based on the comparison. The identified level may be a pre-determined value, such as a calculated maximum or target. The closed-loop operation may be applied iteratively. For instance, the performance indicator interface, processing logic and operation interface are configured to repeat respective receiving, adjusting and implementing at periodic intervals. The periodic intervals may be 15 minutes, 30 minutes, 45 minutes, 1 hour, 1.5 hours 2 hours, 3 hours, 4 hours, 5 hours, 6 hours, 10 hours, 12 hours, 18 hours, 24 hours, 2 days, 3 days, 4 days, 5 days, 6 days, 7 days, 2 weeks, 3 weeks, 4 weeks or 1 month in duration, dependent on the implementation. Additionally or alternatively, the processing logic may be configured to determine a set of base stations for coordinated operation with a single mobile terminal operating with the cellular network. Then, the performance indicator interface, processing logic and operation interface may be configured to repeat respective receiving, adjusting and implementing based on a mobility parameter of the mobile terminal.

In some embodiments, the processing logic is further configured to receive an indication of a type of coordinated operation for which the set of base stations is to be configured and to determine the set of base stations for coordinated operation based the received indication of the type. The type of coordinated operation (coordinated scheduling, joint transmission and/or joint reception, for instance) may affect the way in which the base stations may optimally be selected for coordinated operation.

In embodiments, the ranking of the cellular network base stations comprises a weight value associated with each of the cellular network base stations. Then, the processing logic may be further configured to determine the set of base stations for coordinated operation by selecting cellular network base stations having the associated weight value of at least a predetermined threshold. The predetermined threshold may depend on the type of coordinated operation, for example, in line with the observation above regarding the value of the type indication. Additionally or alternatively, the predetermined threshold may be changed, for example in the closed-loop operation. In such embodiments, the predetermined threshold may be a first predetermined threshold. Then, the processing logic may be further configured to adjust the determined set of base stations for coordinated operation by selecting cellular network base stations having the associated weight value of at least a second predetermined threshold, the second predetermined threshold being different, for example higher (or alternatively lower), than the first predetermined threshold.

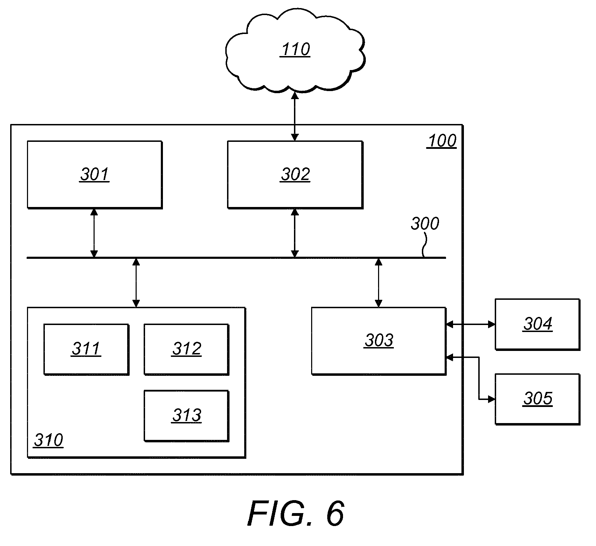

Referring finally to Figure 6, there is schematically depicted a computing device that may be used to implement a SON platform 100. This comprises a bus 300, coupled to a processor 301, a communication interface 302, an input/output controller 303 and a memory 310. The communication interface 302 communicates with the OSS 110 (and/or the RAN, not shown in this drawing). The input/output controller 303 can interface with a display device 304 and/or a user input device 305. Within the memory 310 is stored: an operating system 311; and a SON engine 312. The ANR functionality 105 and coordination set analysis engine 107 can both be implemented in the SON engine 312. Data storage 313 is also provided in the memory 310. This can be used to store the network parameters such as CM, PM and/or FM data or UE call trace data as SON input.

Although specific embodiments have now been described, the skilled person will understand that various modifications and variations are possible. Also, combinations of any specific features shown with reference to one embodiment or with reference to multiple embodiments are also provided, even if that combination has not been explicitly detailed herein.

It will be understood that the Coordination Set Analysis Engine 107 is shown as part of the SON platform 100, but it may be separate from it in other embodiments. In that case, the computing device of Figure 6 may be used for the Coordination Set Analysis Engine 107 only and not necessarily for the ANR 105 and/or any other functionality of the SON 100.

Variations on the specific algorithm and implementations described herein are also possible. These are advantageously based on the principles set out for determining the coordination group. Although the SON platform interfaces with the RAN using the OSS in the embodiments described herein, it should be observed that direct interaction between the SON platform and the RAN may be possible. Additionally or alternatively, direct interaction between the SON and the UE may be considered, for example for direct communication of KPI information. Separately located base stations are shown in Figure 3, but it should be understood that some (or all) of the base stations may be co-located sectors.

## Claims

1. A computational engine for analysis of cellular network base stations, comprising:
an ANR interface, configured to receive a ranking of the cellular network base stations generated at an Automatic Neighbour Relation, ANR, function of a Self-Organising Network, SON, platform; and
processing logic, configured to determine a set of base stations for coordinated operation based on the received ranking of the cellular network base stations.

2. The computational engine of claim 1, further comprising:
a performance indicator interface, configured to receive information about at least one performance indicator for the cellular network base stations; and
wherein the processing logic is further configured to determine the set of base stations for coordinated operation based on the received information about at least one performance indicator.

3. The computational engine of claim 2, wherein the performance indicator interface is configured to receive information the about the at least one performance indicator from an Operation Support System, OSS, of the cellular network, each of the at least one performance indicator being a Key Performance Indicator, KPI, obtained by the OSS.

4. The computational engine of claim 2 or claim 3, wherein the at least one performance indicator comprises one or both of: a capacity level for the cellular network base stations; and a user throughput level for the cellular network base stations.

5. The computational engine of any one of claims 2 to 4, further comprising:
an operation interface, configured to implement coordinated operation using the determined set of base stations;
wherein at least part of the information received by the performance indicator interface relates to when the coordinated operation using the determined set of base stations is implemented; and
wherein the processing logic is further configured to adjust the determined set of base stations for coordinated operation based on the at least part of the information received relating to when the coordinated operation using the determined set of base stations is implemented, and/or
the processing logic is further configured to compare the at least part of the information received relating to when the coordinated operation using the determined set of base stations is implemented against an identified level and to adjust the determined set of base stations for coordinated operation based on the comparison.

6. The computational engine of claim 5, wherein the performance indicator interface, processing logic and operation interface are configured to repeat respective receiving, adjusting and implementing at periodic intervals, and/or
the processing logic is configured to determine a set of base stations for coordinated operation with a single mobile terminal operating with the cellular network and wherein the performance indicator interface, processing logic and operation interface are configured to repeat respective receiving, adjusting and implementing based on a mobility parameter of the mobile terminal.

7. The computational engine of any preceding claim, wherein the processing logic is further configured to receive an indication of a type of coordinated operation for which the set of base stations is to be configured and to determine the set of base stations for coordinated operation based the received indication of the type.

8. The computational engine of any preceding claim, wherein the ranking of the cellular network base stations comprises a weight value associated with each of the cellular network base stations and wherein the processing logic is further configured to determine the set of base stations for coordinated operation by selecting cellular network base stations having the associated weight value of at least a predetermined threshold.

9. The computational engine of claim 8, when dependent on claim 5, wherein the predetermined threshold is a first predetermined threshold and wherein the processing logic is further configured to adjust the determined set of base stations for coordinated operation by selecting cellular network base stations having the associated weight value of at least a second predetermined threshold, the second predetermined threshold being higher than the first predetermined threshold.

10. The computational engine of claim 8 or claim 9, wherein the processing logic is further configured to receive an indication of a type of coordinated operation for which the set of base stations is to be configured and wherein the predetermined threshold is set based on the received indication of the type.

11. The computational engine of claim 6 or claim 10, wherein the received indication of the type of coordinated operation comprises one or more of: coordinated scheduling; joint transmission; and joint reception.

12. The computational engine of any preceding claim, further comprising:
an operation interface, configured to communicate the determined set of base stations to an Operation Support System, OSS, of the cellular network, such that the OSS implements coordinated operation using the determined set of base stations.

13. A method for analysis of cellular network base stations, comprising:
receiving a ranking of the cellular network base stations generated at an Automatic Neighbour Relation, ANR, function of a Self-Organising Network, SON, platform; and
determining a set of base stations for coordinated operation based on the received ranking of the cellular network base stations.

14. The method of claim 13, wherein each of the cellular network base stations comprises: a respective Base Band Unit, BBU; and a respective Remote Radio Unit, RRU and wherein the RRU of each cellular network base station is located at the same site as the BBU of that cellular network base station.

15. A computer program, configured when operated by a processor to carry out the method of claim 13 or claim 14.
